# EUROPÄISCHE PATENTSCHRIFT

(11) **EP 1 930 120 B1**
(45) Veröffentlichungstag und Bekanntmachung des Hinweises auf die Patenterteilung: **21.10.2009**
(21) Anmeldenummer: 06127069.0
(22) Anmeldetag: 22.12.2006
(51) Int. Cl.: B23Q 17/22, B23Q 17/24

(54) **Verfahren zum Einstellen von jeweils ein spangebendes Werkzeug aufweisenden Bearbeitungseinheiten**
Method for setting processing units each with a chipping tool
Procédé destiné au réglage d'unités de traitement comprenant respectivement un outil d'usinage

(30) Priorität: 17.11.2006 DE 102006054275
(43) Veröffentlichungstag der Anmeldung: 11.06.2008
(73) Patentinhaber: PREWI Schneidwerkzeuge GmbH, 32052 Herford (DE)
(72) Erfinder: Altenhöner, Horst, 32052, Herford (DE)
(74) Vertreter: Dantz, Jan Henning

(56) Entgegenhaltungen:
- EP-A- 0 899 058
- DE-U1- 20 119 820
- DE-U1- 29 709 877
- US-A1- 2002 054 800

## Beschreibung

Die Erfindung bezieht sich auf ein Verfahren zum Einstellen von jeweils ein spangebendes Werkzeug aufweisenden Bearbeitungseinheiten einer Maschine zum Bearbeiten von Werkstücken aus Holz oder Holzersatzwerkstoffen im Bereich der Längs- und/oder Querkanten, bei dem die Werkstücke kontinuierlich im Durchlaufverfahren durch die in Reihe angeordneten Bearbeitungseinheiten transportierbar sind.

Bevorzugt werden nach dem vorstehend beschriebenen Verfahren Fußbodenbretter bearbeitet, jedoch kommen auch andere Profile in Frage. Um die Querschnitte zu erzielen, müssen die spangebenden Werkzeuge der Bearbeitungseinheiten querschnittsabhängig zueinander eingestellt werden. Aus diesen Querschnitten ergibt sich, dass eine nach dem Verfahren arbeitende Maschine eine relativ hohe Anzahl von Bearbeitungseinheiten aufweisen muss, wobei je nach Querschnitt des Werkstückes auch entsprechend gestaltete Werkzeuge verwendet werden. Da die Querschnitte häufig so gestaltet sind, dass zumindest die Längskantenbereiche von zwei ineinander greifenden Werkstücken bzw. Paneelen sinngemäß passgenau ineinander greifen, ist eine äußerst präzise Einstellung der Bearbeitungseinheiten notwendig. Bislang erfolgten diese Einstellungen für jede Bearbeitungseinheit durch spangebende Bearbeitungen in Form von Probeläufen, die nacheinander durchgeführt wurden. Die Einstellung aller Bearbeitungseinheiten ist demzufolge recht zeitaufwendig.

In der US 2002/054800 A1 wird eine Maschine beschrieben, die ausschließlich mit einem Werkzeug ausgestattet ist, welches nach einer gedruckten Schaltung längs eines räumlichen Koordinatensystems verfahrbar ist. Das Werkzeug ist als Schneidwerkzeug ausgelegt. Zur Vermeidung von Unfällen durch Eingriffe der Bedienperson in den Wirkungsbereich des Werkzeuges wird der Schneidvorgang auf den Bildschirm eines Monitors übertragen. Dadurch kann die Bedienperson den Schneidvorgang überwachen. Wie die Übertragung auf den Bildschirm erfolgt, ist der Literaturstelle nicht zu entnehmen.

In der DE 297 09 877 U1 wird eine Vorrichtung zum Ausrichten und zur Funktionskontrolle von Werkzeugen, die Teil von Werkzeug- oder Schmuck- bzw. Edelsteinbearbeitungsmaschinen oder dergleichen sind, beschrieben. Diese Maschine ist mit beweglichen Elementen für die Bearbeitung eines eingespannten Gegenstandes versehen, der mittels einer Spannvorrichtung festgelegt ist. Darüber hinaus enthält diese Maschine nicht mehrere hintereinander angeordnete Bearbeitungseinheiten. Da die Bearbeitung durch eine Bewegung der Elemente erfolgt, und das zu bearbeitende Werkstück fest eingespannt ist, kann dieser Literaturstelle keine Lehre entnommen werden, wie die Einstellung auf die jeweils herzustellenden Querschnitte von durchlaufenden Werkstücken erfolgen könnte.

Der Erfindung liegt die Aufgabe zugrunde, ein Verfahren zum Einstellen der jeweils ein spangebendes Werkzeug aufweisenden Bearbeitungseinheiten einer Maschine der eingangs näher beschriebenen Art aufzuzeigen, mit dem die benötigte Zeit wesentlich verkürzt wird, so dass die mögliche Laufzeit entsprechend erhöht wird, wodurch eine solche nach dem erfindungsgemäßen Verfahren arbeitende Maschine wirtschaftlicher betrieben werden kann. Der Erfindung liegt ferner die Aufgabe zugrunde, eine mit den Bearbeitungseinheiten ausgerüstete Maschine so zu gestalten, dass die benötigte Zeit zur Einstellung der Bearbeitungseinheiten mit einfachen, allgemein bekannten Geräten wesentlich verkürzt werden kann.

Die auf das Verfahren gerichtete Aufgabe wird gelöst, indem mittels einer Kamera die jeweilige Stellung zumindest des spangebenden Werkzeuges der einzustellenden Bearbeitungseinheit aufgenommen und auf ein Sichtgerät bildlich übertragen wird, dass das Sichtgerät den Querschnitt von zumindest einem Werkstück im Endzustand wiedergibt, so dass zur Positionierung des spangebenden Werkzeuges das Sichtgerät als Lehre verwendbar ist.

Das erfindungsgemäße Verfahren könnte als optisches Einrichtungssystem bezeichnet werden, da die Kamera ein wesentliches Funktionsbauteil darstellt. Das Sichtgerät erhält die zur Darstellung des Querschnittes bzw. der Querschnitte notwendigen Daten aus einer Zeichnungsdatei. Dadurch lassen Sie sich jederzeit abrufen. Die Einstellung des Werkzeuges bzw. der Bearbeitungseinheit könnte als ein sich überlagernder Vorgang angesehen werden, der durch die Kombination des Sichtgerätes mit der zugehörigen Zeichnungsdatei und der Übertragung des von der Kamera aufgenommenen Bildes auf das Sichtgerät gesehen wird. Auf dem Sichtgerät erscheint dann die Stellung des zu bearbeitenden Werkstückes bzw. der durchzuführenden spangebenden Profilierung an diesem Werkstück gegenüber dem Werkzeug bzw. der Bearbeitungseinheit. Zumindest könnte dieser Einstellvorgang der Bearbeitungseinheit als eine Voreinstellung gesehen werden, so dass unter Umständen nur noch geringfügige Korrekturen vorgenommen werden müssen. Durch die Anwendung des erfindungsgemäßen Verfahrens kann man davon ausgehen, dass die benötigte Zeit zur Einstellung der Bearbeitungseinheit auf einen Bruchteil der bislang benötigten Zeit reduziert wird. Dadurch wird die Verfügbarkeit der Maschine bzw. deren Laufzeit deutlich erhöht, so dass eine äußerst nennenswerte Produktivitätssteigerung gegeben ist. Das erfindungsgemäße Verfahren könnte nicht nur als optisches Einrichtungssystem gesehen werden, sondern auch als ein Messverfahren, bei dem die Position des spangebenden Werkzeuges gegenüber dem auf dem Sichtgerät angezeigten Querschnitt erkennbar ist.

In weiterer Ausgestaltung ist vorgesehen, dass die Kamera eine Digitalkamera und dass das Sichtgerät als Notebook ausgebildet ist, die über ein Signale übertragendes Kabel miteinander verbunden sind. Bei diesen Geräten handelt es sich um handelsübliche Geräte, die im Fachhandel oder über spezialisierte Märkte zu beziehen sind. Erfindungsgemäß wird das Sichtgerät bzw. das Notebook für die Einstellung der Bearbeitungseinheit bzw. des Werkzeuges verwendet.

Es ist ferner vorgesehen, dass die Kamera gegenüber der jeweiligen Bearbeitungseinheit bzw. dem spangebenden Werkzeug an einem Fixpunkt festsetzbar ist, da dadurch stets die gleiche Position gegenüber dem Werkzeug eingenommen wird.

Die auf die Maschine gemäß dem Oberbegriff des Anspruchs 4 gerichtete Aufgabe wird gelöst, indem zur Ermittlung der jeweiligen Stellung des zumindest spangebenden Werkzeuges der Bearbeitungseinheit mittels einer Kamera der Bearbeitungsstation eine ortsfest angeordnete Aufnahme für die Kamera zugeordnet ist, und dass die Kamera mit einem Sichtgerät über ein Kabel verbunden ist, so dass die jeweilige auf das Sichtgerät übertragene Stellung des Werkzeuges der Bearbeitungseinheit gegenüber der dem Querschnitt im Endzustand des zu bearbeitenden Werkstückes anzeigenden Sichtgerätes veränderbar ist. Durch die ortsfeste Aufnahme wird stets bei jedem Einstellvorgang die Kamera in gleicher Stellung gegenüber der Bearbeitungsstation positioniert. Darüber hinaus kann die Aufnahme so ausgelegt sein, dass die Kamera ohne weitere Befestigungs- oder Verbindungselemente positioniert werden kann. Da jede Bearbeitungseinheit so ausgelegt ist, dass sie feinfühlig verstellt werden kann, wird zumindest eine äußerst genaue Voreinstellung des spangebenden Werkzeuges ermöglicht, so dass nach Durchlauf eines als Test anzusehenden Werkstückes, wenn überhaupt, nur noch geringfügige Korrekturen notwendig sind.

In besonders konstruktiv einfacher Weise ist vorgesehen, dass die Aufnahme gegenüber der einstellbaren Bearbeitungseinheit ortsfest angeordnet ist. Dadurch wird stets die gleiche Position während des Einstellvorganges der Bearbeitungseinheit eingenommen. Die Aufnahme ist jeder Bearbeitungseinheit zugeordnet. Damit die Kamera nach dem Einstellvorgang in einfachster Weise in die nächste einzustellende Bearbeitungseinheit einbringbar ist, ist vorgesehen, dass die Kamera in einen Halter schließend eingesetzt ist, der in die der jeweiligen Bearbeitungseinheit zugeordneten Aufnahme einsetzbar ist.

Anhand der beiliegenden Zeichnung wird die Erfindung noch näher erläutert.

Es zeigt:

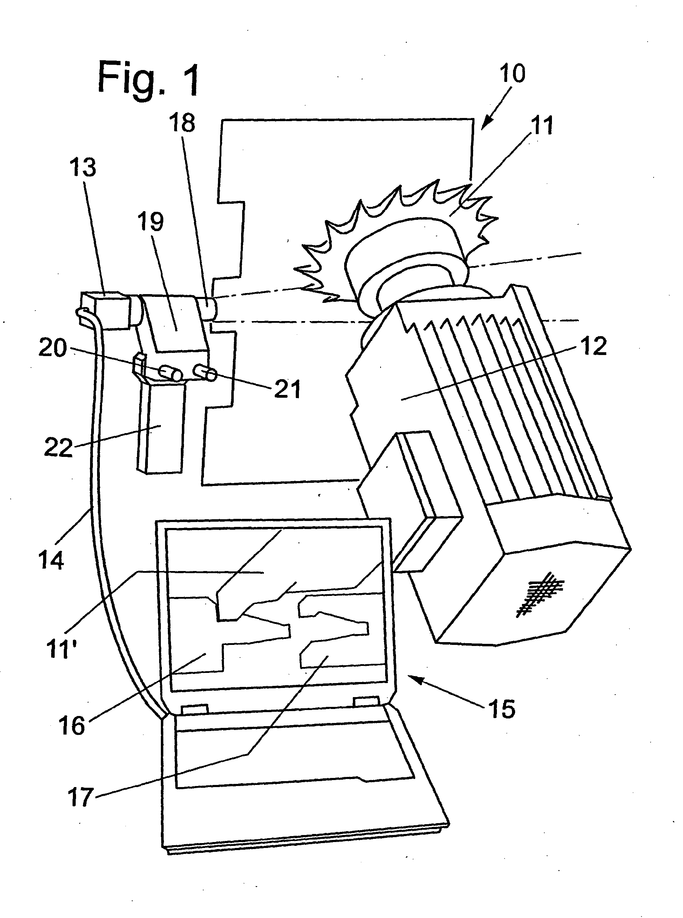

- Figur 1: Die Bearbeitungseinheit einer nach dem erfindungsgemäßen Verfahren arbeitenden Maschine in einer Ansicht, jedoch in vereinfachter Darstellung.

Die in der Figur 1 dargestellte Bearbeitungseinheit 10 einer nach dem erfindungsgemäßen Verfahren arbeitenden Maschine besteht im Wesentlichen aus einem rotierend antreibbaren, spangebenden Werkzeug 11 und einem Antriebsmotor 12, der in nicht näher dargestellter Weise über ein Stromversorgungskabel mit elektrischer Energie beaufschlagt werden kann. Der Antriebsmotor 12 mit dem Werkzeug 11 ist in nicht dargestellter Weise gegenüber dem ortsfesten Maschinengestell und einer Fördereinrichtung für die Werkstücke einstellbar. Da diese Halterungen bekannt sind, sind sie aus Gründen der vereinfachten Darstellung nicht gezeichnet. Eine Maschine enthält mehrere in Reihe angeordnete Bearbeitungseinheiten 10, die von dem zu bearbeitenden Werkstück nacheinander durchlaufen werden.

Der Bearbeitungseinheit 10 ist eine Digitalkamera 13 zugeordnet, deren Aufnahmefeld auf das spangebende Werkzeug 11 gerichtet ist, wie durch die strichpunktierten Linien dargestellt ist. Die Digitalkamera 13 ist über ein Kabel 14 mit einem Sichtgerät in Form eines Notebooks 15 verbunden. Wie die Figur zeigt, erscheinen im dargestellten Ausführungsbeispiel die Querschnitte 16, 17 von zwei profilierten Werkstücken, die im Endzustand an den einander zugewandten Längskanten so profiliert sind, dass sie nach Art einer Nut und Feder form- und/oder kraftschlüssig ineinander greifen. Die Querschnitte 16, 17 der Werkstücke werden in an sich bekannter Weise aus Zeichnungsdateien auf den Bildschirm des Notebooks 15 übertragen bzw. angezeigt. Auf dem Bildschirm des Notebooks 15 ist die Stellung 11' des Werkzeuges 11 gegenüber dem Querschnitt 16 des zu bearbeitenden Werkstückes zu erkennen. Durch Veränderung der Stellung des Antriebsmotors 12 und somit auch des Werkzeuges 11 ändert sich auch die angezeigte Stellung 11' gegenüber dem Querschnitt 16.

Die Digitalkamera 13 ist eine Kamera, die einen zylindrischen Ansatz 18 aufweist. Diese zylindrische Ansatz 18 ist in eine Bohrung eines Halters 19 schließend eingesetzt. Der Halter 19 ist an der der Bohrung abgewandten Seite mit zwei achsparallelen Bohrungen versehen, die von zwei zylindrischen Stiften 20, 21 einer Aufnahme 22 durchdrungen werden. Die Aufnahme 22 ist gegenüber der einstellbaren Bearbeitungseinheit 10 ortsfest angeordnet.

Die Erfindung ist nicht auf das dargestellte Ausführungsbeispiel beschränkt. Wesentlich ist, dass zumindest das spangebende Werkzeug 11 der Bearbeitungseinheit 10 mittels einer Kamera, vorzugsweise einer Digitalkamera 13 erfasst wird, und dass die Kamera mit einem Sichtgerät, vorzugsweise in Form eines Notebooks 15 über ein Kabel 14 verbunden ist. Auf den Bildschirm des Notebooks 15 wird aus einer Zeichnungsdatenbank ein Querschnitt 16, 17 im Endzustand von wenigstens einem Werkstück übertragen. Das von der Kamera 13 aufgenommene Bild wird ebenfalls auf den Bildschirm des Notebooks 15 übertragen, so dass eine Einstellung der Bearbeitungseinheit 10 gegenüber dem auf dem Bildschirm erscheinenden Querschnitt eines Werkstückes 16 einstellbar ist.

## Patentansprüche

1. Verfahren zum Einstellen von jeweils ein spangebendes Werkzeug (11) aufweisenden Bearbeitungseinheiten (10) einer Maschine zum Bearbeiten von Werkstücken aus Holz oder Holzersatzwerkstoffen im Bereich der Längsund/oder Querkanten, bei dem die Werkstücke kontinuierlich im Durchlaufverfahren durch die in Reihe angeordneten Bearbeitungseinheiten (10) transportierbar sind, **dadurch gekennzeichnet, dass** mittels einer Kamera (13) die jeweilige Stellung zumindest des spangebenden Werkzeuges (11) der einzustellenden Bearbeitungseinheit (10) aufgenommen und auf ein Sichtgerät (15) bildlich übertragen wird, dass das Sichtgerät (15) den Querschnitt (16, 17) von zumindest einem Werkstück im Endzustand wiedergibt, so dass zur Positionierung des spangebenden Werkzeuges (11) das Sichtgerät (15) als Lehre verwendbar ist.

2. Verfahren nach Anspruch 1, **dadurch gekennzeichnet, dass** die Kamera eine Digitalkamera (13) und das das Sichtgerät als Notebook ausgebildet ist, die über ein Signale übertragendes Kabel (14) miteinander verbunden sind.

3. Verfahren nach Anspruch 1 oder 2, **dadurch gekennzeichnet, dass** die Kamera (13) gegenüber der jeweiligen Bearbeitungseinheit (10) an einem Fixpunkt zur Einstellung des Werkzeuges (11) der Bearbeitungseinheit (10) festsetzbar ist.

4. Maschine insbesondere zur Durchführung des Verfahrens nach Anspruch 1, die mehrere in Reihe angeordnete Bearbeitungseinheiten (10), ein ortsfestes Maschinengestell und eine Fördereinrichtung zum kontinuierlichen Transport der nacheinander die Bearbeitungseinheiten (10) durchlaufenden Werkstücke aufweist, dass jede Bearbeitungseinheit (10) im Wesentlichen aus einem rotierend antreibbaren, spangebenden Werkzeug (11) und einem Antriebsmotor (12) besteht, und dass das spangebende Werkzeug (11) und der Antriebsmotor (12) gegenüber dem ortsfesten Maschinengestell und der Fördereinrichtung einstellbar sind, **dadurch gekennzeichnet, dass** zur Ermittlung der jeweiligen Stellung des zumindest spangebenden Werkzeuges (11) der Bearbeitungseinheit (10) mittels einer Kamera (13) der Bearbeitungseinheit (10) eine ortsfest angeordnete Aufnahme (22) für die Kamera (13) zugeordnet ist, und dass die Kamera (13) mit einem Sichtgerät (15) über ein Kabel (14) verbunden ist, so dass die jeweilige auf das Sichtgerät (15) übertragene Stellung des Werkzeuges (11) gegenüber der den Querschnitt (16, 17) im Endzustand des zu bearbeitenden Werkstückes anzeigenden Sichtgerät (15) veränderbar ist.

5. Maschine nach Anspruch 4, **dadurch gekennzeichnet, dass** die Kamera (13) stets positionsgleich in einen Halter (19) eingesetzt ist, der gegenüber der Aufnahme (22) ortsfest ist.

6. Maschine nach Anspruch 4 oder 5, **dadurch gekennzeichnet, dass** die Aufnahme (22) gegenüber der einstellbaren Bearbeitungseinheit (10) ortsfest angeordnet ist.

7. Maschine nach einem oder mehreren der vorstehenden Ansprüche 4 - 6, **dadurch gekennzeichnet, dass** die Kamera (13) in einen Halter (19) schließend eingesetzt ist, der in die der jeweiligen Bearbeitungseinheit (10) zugeordneten Aufnahme (22) einsetzbar ist.

## Claims

1. Method of setting machining units (10), having a respective cutting tool (11), for a machine designed to machine workpieces made of wood or wood substitute materials in the region of the longitudinal and/or transverse edges, in which the workpieces can be transported in a continuous operation through the machining units (10) arranged in a row, **characterized in that**, by means of a camera (13), the respective position at least of the cutting tool (11) of the machining unit (10) to be set is recorded and transmitted graphically to a display unit (15), **in that** the display unit (15) reproduces the cross section (16, 17) of at least one workpiece in the final state, such that the display unit (15) can be used as a gauge for positioning the cutting tool (11).

2. Method according to Claim 1, **characterized in that** the camera is a digital camera (13) and **in that** the display unit is designed as a notebook, said camera and said display unit being connected to one another via a cable (14) transmitting signals.

3. Method according to Claim 1 or 2, **characterized in that** the camera (13) can be secured to a fixed point relative to the respective machining unit (10) in order to set the tool (11) of the machining unit (10).

4. Machine in particular for carrying out the method according to Claim 1, which has a plurality of machining units (10) arranged in a row, a fixed machine frame and a conveying device for the continuous transport of the workpieces passing one after the other through the machining units (10), wherein each machining unit (10) essentially comprises a rotationally drivable cutting tool (11) and a drive motor (12), and wherein the cutting tool (11) and the drive motor (12) can be set relative to the fixed machine frame and the conveying device, **characterized in that**, to determine the respective position at least of the cutting tool (11) of the machining unit (10) by means of a camera (13), a holding fixture (22), arranged in a fixed position, for the camera (13) is assigned to the machining unit (10), and **in that** the camera (13) is connected to a display unit (15) via a cable (14), such that the respective position, transmitted to the display unit (15), of the tool (11) relative to the display unit (15) indicating the cross section (16, 17) in the final state of the workpiece to be machined can be varied.

5. Machine according to Claim 4, **characterized in that** the camera (13) is always inserted in an identical position into a holder (19) which is fixed relative to the holding fixture (22).

6. Machine according to Claim 4 or 5, **characterized in that** the holding fixture (22) is arranged in a fixed position relative to the machining unit (10) that can be set.

7. Machine according to one or more of the preceding Claims 4 to 6, **characterized in that** the camera (13) is inserted in a closing manner into a holder (19) which can be inserted into the holding fixture (22) assigned to the respective machining unit (10).

## Revendications

1. Procédé destiné au réglage d'unités de traitement (10) présentant chacune un outil d'usinage par enlèvement de copeaux (11) d'une machine de traitement de pièces en bois ou en matériaux de substitution au bois au niveau des arêtes longitudinales et/ou transversales, dans le cadre duquel les pièces peuvent être transportées continuellement dans un procédé de passage continu au travers des unités de traitement (10) disposées en ligne, **caractérisé en ce que** la position respective au moins de l'outil d'usinage (11) de l'unité de traitement (10) à régler est enregistrée à l'aide d'une caméra (13) et transmise sous forme d'image à un appareil de visualisation (15), **en ce que** l'appareil de visualisation (15) restitue la section transversale (16, 17) d'au moins une pièce à l'état final si bien que l'appareil de visualisation (15) peut être utilisé comme gabarit pour le positionnement de l'outil d'usinage (11).

2. Procédé selon la revendication 1, **caractérisé en ce que** la caméra est une caméra numérique (13), et **en ce que** l'appareil de visualisation est réalisé sous forme d'ordinateur portable, qui sont reliés l'un à l'autre par le biais d'un câble (14) de transmission des signaux.

3. Procédé selon la revendication 1 ou 2, **caractérisé en ce que** la caméra (13) peut être fixée par rapport à l'unité de traitement (10) respective à un point fixe pour le réglage de l'outil d'usinage (11) de l'unité de traitement (10).

4. Machine destinée en particulier à la mise en oeuvre du procédé selon la revendication 1, qui comporte plusieurs unités de traitement (10) disposées en ligne, un bâti de machine stationnaire et un dispositif de transport pour le transport continu des pièces passant les unes après les autres au travers des unités de traitement (10), chaque unité de traitement (10) se composant essentiellement d'un outil d'usinage par enlèvement de copeaux (11) pouvant être entraîné en rotation et d'un moteur d'entraînement (12), et l'outil d'usinage (11) et le moteur d'entraînement (12) pouvant être réglés par rapport au bâti de machine stationnaire et au dispositif de transport, **caractérisée en ce que** pour déterminer la position respective au moins de l'outil d'usinage (11) de l'unité de traitement (10) à l'aide d'une caméra (13), un logement (22) disposé de manière stationnaire pour la caméra (13) est affecté à l'unité de traitement (10) et **en ce que** la caméra (13) est reliée à un appareil de visualisation (15) par le biais d'un câble (14) si bien que la position respective de l'outil d'usinage (11) transmise à l'appareil de visualisation (15) peut être modifiée par rapport à l'appareil de visualisation (15) affichant la section transversale (16, 17) à l'état final de la pièce à traiter.

5. Machine selon la revendication 4, **caractérisée en ce que** la caméra (13) est toujours insérée dans la même position dans un support (19) qui est stationnaire par rapport au logement (22).

6. Machine selon la revendication 4 ou 5, **caractérisée en ce que** le logement (22) est disposé de manière stationnaire par rapport à l'unité de traitement (10) réglable.

7. Machine selon l'une ou plusieurs des revendications précédentes 4 à 6, **caractérisée en ce que** la caméra (13) est insérée à fleur dans un support (19), qui peut être inséré dans le logement (22) associé à l'unité de traitement (10) respective.
